# DEMANDE DE BREVET EUROPEEN

(11) **EP 0 673 799 A1**
(43) Date de publication de la demande: **27.09.1995**
(21) Numéro de dépôt: 95400622.7
(22) Date de dépôt: 21.03.1995
(51) Int. Cl.: B60N 2/06

(54) **Glissière de siège automobile**

(30) Priorité: 24.03.1994 FR 9403470
(71) Demandeur: BERTRAND FAURE FRANCE, F-92100 Boulogne (FR)
(72) Inventeur: Baloche, François, F-61100 Flers (FR); Reubeuze, Yann, F-6100 Flers (FR)
(74) Mandataire: Madeuf, René Louis

(57) **Abrégé**

Glissière de siège automobile permettant le réglage longitudinal de ce siège, constituée d'un profilé interne et d'un profilé externe, et caractérisée en ce que :
a) le profilé interne (1) présente une section en U prolongée par des zones courbes (5, 6) ;
b) le profilé externe (10) se compose d'un plan supérieur (11) bordé de manière symétrique, par rapport à un axe vertical médian X - X1, par des premiers chemins de guidage (14, 15) prolongés par des zones de liaison (18, 19) reliant ces premiers chemins de guidage à des deuxièmes chemins de guidage (21, 22), des éléments de glissement ou roulement étant insérés entre les premiers chemins de guidage et les zones courbes, puis entre ces zones courbes et les deuxièmes chemins de guidage, ces zones courbes autorisant un léger mouvement de rotation d'un profilé par rapport à l'autre.

## Description

On connaît depuis fort longtemps des dispositifs mécaniques appelés glissières de réglage longitudinal de la position d'un siège dans un véhicule et, en particulier, dans un véhicule automobile.

Chaque glissière est, le plus souvent, constituée par un premier profilé à section sensiblement en U ouvert vers le haut et fixé sur le plancher du véhicule automobile tandis qu'un deuxième profilé, à section également sensiblement en U, est placé en sens inverse sur le premier profilé avec interposition entre les deux profilés d'organes de glissement ou de roulement permettant le coulissement du profilé externe sur le profilé interne ; de plus, le profilé externe est relié par différents moyens au siège du véhicule considéré afin de permettre de régler longitudinalement ce siège suivant la morphologie de l'utilisateur.

De telles glissières sont décrites et représentées en particulier dans le FR-A-2 390 625, le FR-A-2 098 852, le FR-A-2 286 723, le DE-A-2 545 763 ainsi que dans le FR-A-2 282 349.

Cependant, ces glissières n'ont pas donné satisfaction car on n'est pas arrivé, jusqu'à présent, à satisfaire des exigences souvent contradictoires et qui peuvent être résumées de la façon suivante :
a) un effort de coulissement le plus faible possible malgré des défauts de géométrie du plancher du véhicule, cet effort de coulissement étant l'effort nécessaire au déplacement d'un profilé par rapport à l'autre.
b) ces glissières ne doivent pas faire de bruit et doivent avoir, si possible, peu sinon pas de jeu afin d'augmenter le confort des passagers du véhicule.
c) une bonne rigidité de l'ensemble car ces glissières coopèrent à la protection du passager en cas de chocs ou accidents du fait que, dans les véhicules modernes, la plupart des sièges sont équipés de ceintures de sécurité embarquées, c'est-à-dire solidaires du siège considéré et que, de ce fait, les glissières subissent, en cas de chocs et/ou accidents, des efforts d'arrachement et de torsion considérables qu'elles doivent absorber afin d'éviter le plus possible des contusions plus ou moins graves au passager.

Mais une bonne rigidité est incompatible entre un effort de coulissement faible et le rattrapage des défauts d'environnement. En effet, les profilés actuels sont soit suffisamment souples pour absorber les défauts, soit ils sont rigides mais, dans ce cas, les défauts ne sont pas absorbés et un jeu est nécessaire pour un effort de coulissement faible.

La présente invention a pour objet de créer une glissière rigide qui s'affranchit des défauts d'environnement tout en présentant un effort de coulissement extrêmement faible et des déplacements silencieux sans jeu.

Conformément à l'invention, la glissière de siège d'automobile permettant le réglage longitudinal de ce siège est constituée d'un profilé interne et d'un profilé externe et se caractérise par le fait que :
a) le profilé interne présente une section en U prolongée par des zones courbes ;
b) le profilé externe se compose d'un plan supérieur bordé de manière symétrique, par rapport à un axe médian vertical, par des premiers chemins de guidage prolongés par des zones de liaison reliant ces premiers chemins de guidage à des deuxièmes chemins de guidage, des éléments de glissement ou roulement étant insérés entre les premiers chemins de guidage et les zones courbes, puis entre ces zones courbes et les deuxièmes chemins de guidage, ces zones courbes autorisant un léger mouvement de rotation d'un profilé par rapport à l'autre.

Suivant une autre caractéristique de l'invention, le profilé externe comporte, entre chaque extrémité du plan supérieur et le premier chemin de guidage, une rainure permettant d'augmenter l'enveloppe des éléments de glissement ou de roulement tels que des billes installées entre les premiers chemins de guidage et les zones courbes.

Finalement, suivant d'autres particularités de l'invention :
a) les zones courbes présentent un bourrelet limitant la rotation d'un profilé par rapport à l'autre ;
b) les zones courbes du profilé interne sont terminées par des rabats ;
c) les zones de liaison enveloppent les rabats ;
d) les éléments de glissement ou roulement sont des billes ;
e) les profilés interne et externe sont en aciers spéciaux, légèrement souples et élastiques .
f) les éléments de glissement ou de roulement sont séparés dans le sens longitudinal par des écarteurs.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une coupe transversale de la glissière en position moyenne lorsqu'elle est verrouillée.

La fig. 2 est une coupe transversale de la glissière montrant les déplacements possibles en position latérale de ± 1°.

La fig. 3 montre un perfectionnement de l'invention.

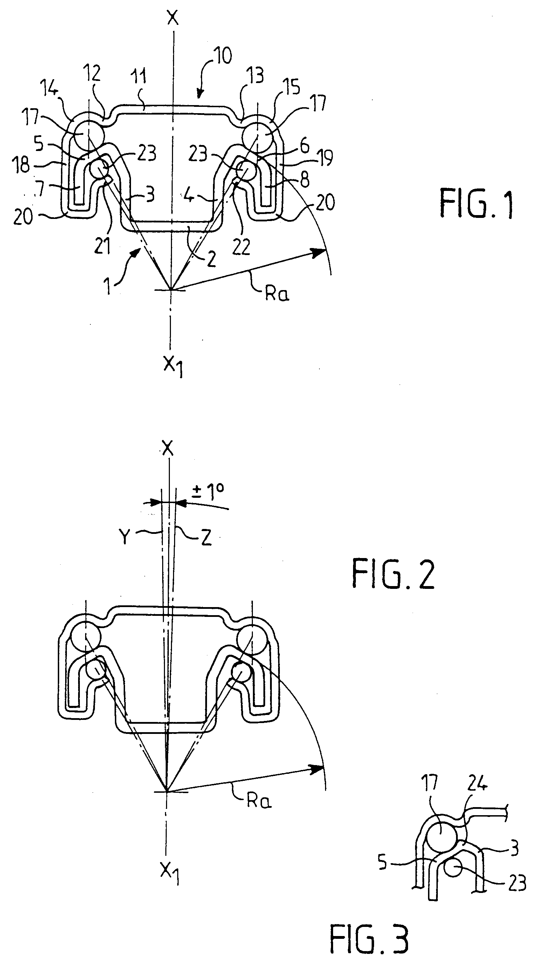

A la fig. 1, on a représenté, en coupe transversale, la glissière qui se compose d'un profilé interne 1 qui a, en section, une base plane 2 surmontée d'ailes verticales 3, 4 perpendiculaires à la base 2. Les ailes 3, 4 du profilé sont prolongées par des zones courbes 5, 6 se terminant ensuite par des rabats 7, 8 sensiblement parallèles à l'axe vertical médian X - Xl.

Le profilé externe 10, dont la position est inversée par rapport au profilé interne 1, se compose d'un plan supérieur 11 bordé de manière symétrique par rapport à l'axe X - Xl de deux rainures 12, 13 ayant pour fonctions :
a) de raidir la partie supérieure du profilé supérieur 10, c'est-à-dire finalement de raidir la glissière ;
b) de délimiter de part et d'autre de ces rainures 12, 13, deux chemins de guidage 14, 15 dans lesquels sont placés des éléments de glissement ou de roulement tels que des billes 17, en général au nombre de quatre ou de six, séparés dans le sens longitudinal par des écarteurs (non représentés) constitués de préférence par des pièces cylindriques de longueur suffisante dont le diamètre est pratiquement égal au diamètre des billes 17. L'ensemble billes et pièces cylindriques peut se déplacer légèrement, dans le sens longitudinal, entre des butées solidaires des extrémités du profilé inférieur.

Finalement, les zones de liaison 18, 19 du profilé externe, prolongeant les chemins de guidage 14, 15, sont verticales et parallèles à l'axe X - Xl pour ensuite se terminer par des conformations 20 en U entourant les rabats 7, 8 du profilé interne 1. L'extrémité libre de ces conformations 20 présente des deuxièmes chemins de guidage 21, 22, de forme courbe soutenant des éléments de glissement ou de roulement tels que des billes 23, en général d'un diamètre inférieur aux billes 17 et qui centrent le profilé externe 10 par rapport au profilé interne 1.

On se rend parfaitement compte, à la suite de cette description, que la forme courbe des zones 5, 6 installées chacune entre une bille 17 et une bille 23 autorise une légère rotation du profilé interne autour de l'axe X - Xl, et cela de quelques degrés et par exemple de ±1° comme montré de manière schématique à la fig. 2. On autorise ainsi, sans contrainte, les défauts angulaires des zones de fixation siège et plancher.

L'effort de coulissement est extrêmement faible puisque les billes 17, 23 assurent un mouvement rectiligne parfait, souple et sans bruit, surtout si on peut utiliser des billes métalliques ou des billes en matière plastique grasse, de haute résistance, évitant ainsi bruit et jeux.

A la fig. 3, montrant un perfectionnement de l'invention, un bourrelet 24 empêche une rotation excessive d'un profilé par rapport à l'autre. Un tel bourrelet 24 est disposé à la jonction entre chaque aile 3, 4 et chaque zone courbe 5, 6.

En outre, la glissière est munie, de façon classique, d'un organe de verrouillage (non représenté) placé entre le profilé interne 1 et le profilé externe 10, cet organe de verrouillage étant commandé, pour les deux glissières parallèles de support d'un siège, au moyen d'une commande soit déportée à l'avant, soit latérale par rapport à ce siège.

## Revendications

**1 -** Glissière de siège automobile permettant le réglage longitudinal de ce siège, constituée d'un profilé interne et d'un profilé externe, et caractérisée en ce que :
a) le profilé interne (1) présente une section en U prolongée par des zones courbes (5, 6) ;
b) le profilé externe (10) se compose d'un plan supérieur (11) bordé de manière symétrique, par rapport à un axe vertical médian X - Xl, par des premiers chemins de guidage (14, 15) prolongés par des zones de liaison (18, 19) reliant ces premiers chemins de guidage à des deuxièmes chemins de guidage (21, 22), des éléments de glissement ou roulement (17, 23) étant insérés entre les premiers chemins de guidage (14, 15) et les zones courbes (5, 6), puis entre ces zones courbes (5, 6) et les deuxièmes chemins de guidage (21, 22), ces zones courbes autorisant un léger mouvement de rotation d'un profilé par rapport à l'autre.

**2 -** Glissière de siège suivant la revendication 1, caractérisée en ce que le profilé externe comporte, entre chaque extrémité du plan supérieur (11) et les premiers chemins de guidage, une rainure (12, 13) permettant d'augmenter l'enveloppe des éléments de glissement ou roulement tels que des billes (17) installées entre les premiers chemins de guidage et les zones courbes (5, 6).

**3 -** Glissière de siège suivant les revendications 1 ou 2, caractérisée en ce que les zones courbes présentent chacune un bourrelet (24) limitant la rotation d'un profilé par rapport à l'autre.

**4 -** Glissière de siège suivant l'une des revendications 1 à 3, caractérisée en ce que les zones courbes du profilé interne sont terminées par des rabats (7, 8).

**5 -** Glissière de siège suivant l'une des revendications 1 à 4, caractérisée en ce que les zones de liaison (18, 19) enveloppent les rabats (7, 8).

**6 -** Glissière de siège suivant l'une des revendications 1 à 5, caractérisée en ce que les éléments de glissement ou roulement sont des billes (17, 23).

**7 -** Glissière de siège suivant l'une des revendications 1 à 6, caractérisée en ce que les profilés interne (1) et externe (10) sont en aciers spéciaux, légèrement souples et élastiques.

**8 -** Glissière de siège suivant l'une des revendications 1 à 7, caractérisée en ce que les éléments de glissement ou de roulement sont séparés dans le sens longitudinal par des écarteurs.

**9 -** Glissière de siège automobile permettant le réglage longitudinal de ce siège sensiblement telle que décrite et représentée aux dessins annexés.
